Europäisches Patentamt

European Patent Office

Office européen des brevets

(11) Publication number: **0 014 462**
**B1**

(12) EUROPEAN PATENT SPECIFICATION

(45) Date of publication of patent specification: 23.04.86

(21) Application number: 80100578.6

(22) Date of filing: 05.02.80

(51) Int. Cl.⁴: **C 08 G 63/74,** C 08 G 63/62, B 01 D 17/04, C 08 F 6/16

(54) **Continuous process for the purification of polycarbonate solutions.**

(30) Priority: 05.02.79 IT 1988479

(43) Date of publication of application:
20.08.80 Bulletin 80/17

(45) Publication of the grant of the patent:
23.04.86 Bulletin 86/17

(84) Designated Contracting States:
BE DE FR GB NL

(56) References cited:
DE-A-2 350 327
DE-A-2 800 344
DE-B-1 786 218
DE-B-1 945 851
GB-A-1 513 717
JP-A-52 096 697
JP-A-52 098 090

J.H. PERRY et al. "Chemical
Engineers'Handbook", 4th edition 1963, Mc
GRAW-HILL, New York

(73) Proprietor: Montedison S.p.A.
Patents & Licensing Dept. Foro Buonaparte, 31
P.O. Box 10528
I-20121 Milan (IT)

(72) Inventor: Rinaldi, Roberto
3 A Via Dugoni
Mantova (IT)
Inventor: Govoni, Gabriele, Dr.
63 Via Pilastro
Renazzo(Ferrara) (IT)
Inventor: Visani, Francesco, Dr.
12 Via Malpighi, Milan
IT (IT)

(74) Representative: Zumstein, Fritz jun., Dr. et al
Dr. F. Zumstein sen. Dr. E. Assmann Dr. R.
Koenigsberger Dipl.-Ing. F. Klingseisen Dr. F.
Zumstein jun. Bräuhausstrasse 4
D-8000 München 2 (DE)

Courier Press, Leamington Spa, England.

# 0 014 462

**Description**

The present invention concerns a process for the purification of polycarbonate solutions as directly obtained in synthesis and which contain considerable quantities of reaction impurities.

More particularly it relates to an improved process for the complete separation of the phases of the emulsions that are obtained from the operations of close (intimate) contacting of the polycarbonate solutions with water and aqueous solutions at various pHs', necessary for removing from said polycarbonate solutions the impurities of the process.

The aromatic polycarbonates are preferably prepared by interfacial polycondensation, reacting phosgene with aromatic bisphenols in a system consisting of an aqueous alkaline solution and of an organic solvent of the polymer, immiscible with said aqueous solution.

The reaction leads to the formation of appreciable quantities of by-products, that is, alkaline salts such as sodium chloride and sodium carbonate, unreacted monomers (mono- and bisphenols) present in the form of alkaline salts, which in general accumulate in the aqueous phase of the reaction raw material besides the excess in alkaline hydrate and reducing salts such as sulphites, phosphites and thiosulphates, used for hindering the oxidation reactions of phenols.

Other products such as the impurities present in the starting raw materials, the catalysts of the polycondensation reaction, such as the tertiary amines, quaternary ammonium salts, on the contrary, distribute themselves in one or in both phases, depending on their chemical and solubility characteristics.

On the other hand, in order to obtain a polycarbonate with high characteristics, in particular thermal stability, optical properties such as transparency and colour, physical-mechanical properties, it is also necessary to remove from the polymer the slightest traces of foreign matter and thus the impurities mentioned above.

The removal of said impurities from the polymer normally is carried out by purifying the organic solutions of polycarbonate such as those that are obtained from the raw reaction product after gravity separation of the aqueous phase.

More particularly, the purification of the organic solutions of polycarbonate is achieved by intimately contacting said solutions with water and with aqueous solutions, in a series of successive stages, under various pH conditions comprised between 2 and 14 required by the type of impurities that have to be removed.

The efficiency of the purification operation depends not only on the degree of intimate mixing between phases, but also and mainly on the degree of separation that is possible between the two phases for each single washing stage.

Taking into consideration the high viscosity of the polycarbonate solutions in the organic solvents, and the degree of mutual dispersion of the two phases necessary to achieve an effective washing with the consequential formation of very stable dispersions, it was necessary, in order to achieve an effective separation between the organic phase and the aqueous phase forming the emulsion, to subject the latter to very high gravitational forces such as are attained in liquid-liquid centrifuges.

Practically, the separation of the two phases was achieved industrially just by the use of the said centrifuges.

However, the use of the liquid-liquid centrigues which on the one hand allows an efficient separation of the two phases, on the other hand has numerous drawbacks, mainly connected with the technological complexity of these same centrifugal apparatuses and with the characteristics of the polycarbonate solutions to be separated.

Thus, in the case where one has to operate with such centrifuges on polycarbonate solutions in methylene chloride, which is the preferential solvent in the case of interfacial polycondensation, its solvent power towards the polymer and its high density with respect to water which facilitates the separation from the same leads to a lot of problems.

One problem, for instance, is connected with the low boiling point (40°C) of methylene chloride, which requires the insertion of a cooling stage between the various washing stages because the heating caused by the centrifuging operation is quite considerable.

Moreover, methylene chloride shows a considerable aggressiveness towards the materials used for the sealing of the centrifuges.

Although other solvents for polycarbonate may be used, chosen from the class of the aliphatic chlorinated hydrocarbons such as chloroform and 1-2-dichloroethane or aromatic hydrocarbons such as monochlorobenzol, ortho-dichlorobenzol, or aromatic ethers such as anisole their use however considerably reduces the potential output of the centrifuges both because of the lesser difference in density between the polycarbonate solutions and water, as well as for the fact that there must be used solutions having a lower concentration in polycarbonate in relation to the lower solvent power of said hydrocarbons.

Moreover, the selection of the building materials for the centrifuges is much more critical in as much as they have to operate within a wide range of pH conditions from 2 to 14, conditions that are met with in the various washing stages.

Other alternative purification technologies, such as the washing by extraction in counter-current and separation by gravity of the two phases, are scarcely effective and are not suited for industrial applications.

From DE—OS 2 800 344 a process is known for separating water-in-oil emulsions or oil-in-water

2

emulsions which do not contain solid material dissolved therein. This process however cannot be applied to an emulsion which consists of water containing dissolved therein reaction impurities and of an organic solution of polycarbonate.

JP—A—52—96 697 and JP—A—52—98 090 disclose a process for separating and recovering polycarbonate from the reaction solution containing also water. This process consists in passing the reaction mixture through a separator equipped with two filtering layers of polytetrafluoroethylene having different hole diameters and thickness or through a filter layer consisting of polytetrafluoroethylene in the form of a cloth or a packed bed. Also this process is not suited sufficiently for industrial applications.

From Perry, et al., "Chem. Engss. H-book", 4. Ed., pp. 21—19 coalescing and coalescers in general are known. However, also this literature reference does not disclose or suggest the coalescing of emulsions consisting of water containing dissolved therein reaction impurities and of an organic solution of polycarbonate.

There has now been found a process which allows a complete separation of the phases by means of a very simple apparatus which is also of an extremely limited cost when compared to that of a liquid-liquid centrifuge.

Said process consists in sending the aqueous emulsions of polycarbonate in water immiscible organic solvents, in particular the aqueous emulsions coming from the various purification phases of the organic polycarbonate solutions obtained in the synthesis, through a layer of fibres in which takes place the coalescence of the dispersed droplets of the emulsion and the formation of the two layers consisting of the two separate phases of the emulsion.

Such a process of separation of aqueous solutions from polycarbonate solutions proved extraordinarily efficient since it had been possible to reduce the content in water in the separated organic phase to values very near those of its solubility.

In order to obtain a degree of separation comparable with that obtained with the process of this invention, it has been necessary to operate on liquid-liquid centrifuges, but with the previously described drawbacks.

With the process of this invention it is possible to separate highly stable emulsions, prepared with static mixers, turbo-mixers and other types of particularly effective mixers, emulsions that also show a particularly wide weight ratio between the two phases (organic phase in which there is the dissolved polycarbonate, and the aqueous phase of the washing) in general comprised between 0.2 and 50.

The present process is also effective for emulsions having a very high apparent viscosity, with the advantage of permitting use of organic polycarbonate solutions of a very high concentration or alternatively, at equal concentration of the polycarbonate in the solvent, to allow the use of a polycarbonate with a high molecular weight.

Thus, object of this invention is a continuous process for the purification of polycarbonate solution in organic solvents from the process impurities, said process including a series of aqueous washings in which each washing stage is realized by the emulsioning of the organic solution with an aqueous phase of suitable pH comprised between 2 and 14, and by the successive separation of the two phases, characterized in that said separation is achieved by sending the aqueous emulsion, at a spacial velocity of 0.01—2.0 cm/s, through a layer of fibres 10—500 mm thick, and having an apparent density of 0.2—0.7 g/cm$^3$, and by continuously removing the phases that separate, in the form of two layers, through and beyond the layer of fibres.

The emulsions that may be treated according to the process of this invention have a weight ratio between organic phase and the aqueous phase of between 0.2 and 50 and a concentration of the polycarbonate in the organic phase preferably comprised between 10% and 20% by weight.

The fibres of the layer may be chosen from amongst inorganic, natural or synthetic fibres such as glass wool, glass fibres, metal fibres e.g. corrosion resisting steel fibres, polytetrafluoroethylene fibres, polyamide fibres, polyvinyl alcohol based fibres, polyolefine fibres e.g. polypropylene fibres, carbon and cotton fibres.

However, it must be kept in mind that the choice of the type of fibre is conditioned by the aggressiveness of the emulsions and in particular on the pH values of the solution that must be separated.

In this way, in the alkaline washing stages, in which the separation occurs in an alkaline medium, there are obtained excellent results by using metal fibres based on steels resistant to the corrosion typical for the medium due to the presence of methylene chloride or other chlorinated organic solvents, of sodium hydroxides, sodium carbonate, sodium chloride and for pH values up to 13.5.

Operating in an acid medium, for instance, phosphoric acid, sulphuric or hydrochloric acid, there may be used metal wools resistant to the corrosion typical of the medium used, or glass wools.

In general best results are obtained by using metal or glass fibres.

The fibres used for the purpose have preferably a diameter of between 5 and 200 μm.

The separating equipment used for achieving the process of this invention does not show any substantial complications from the constructional or operational point of view.

This equipment consists essentially of a tubular vessel in which is placed a layer of fibres forming the coalescence bed, and an empty space in which there takes place the stratification by gravity of the two phases forming the emulsion, and in which vessel there are provided: an inlet for the emulsion and two (2) outlets for the two phases that separate from the emulsion itself.

**0 014 462**

It must be remarked that the choice of the materials for the construction of the separating equipment is not so critical as in the case of the liquid-liquid centrifuges, it being possible to make the choice just on the basis of the specific conditions of chemical aggressiveness that is met within the single washing stages in which they will be used.

Moreover, in comparison with the liquid-liquid centrifuges, this apparatus only requires a more limited installation and less operational cost, of about 80% less for each washing section, and at the same time it shows a very high degree of reliability.

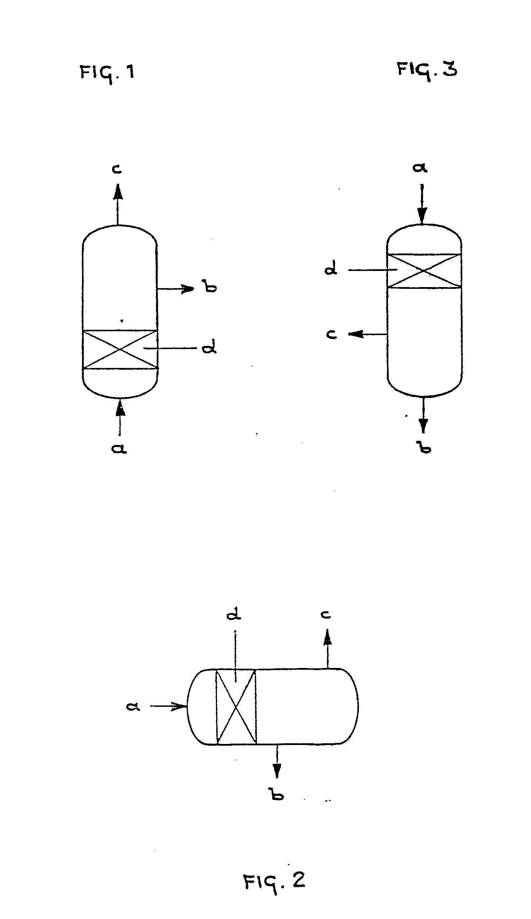

In Figure 1 is shown a schematical example of a separation apparatus used for realizing the present invention.

In said figure are shown: the layer of fibres d), the inlet of the aqueous emulsion in the direction of the arrow a) and the outlets for the organic phase (the heavier phase) in the direction of arrow b) and of the aqueous phase in the direction of arrow c).

It is also possible to use said phase separator according to systems of the type shown in Figures 2 and 3, or a combination of the systems in the various stages of the washing.

Said apparatus has proved to be very versatile in as much as it is possible to scale it up or down within a wide range of specific output capacities which may attain very high values considering that the spacial velocities of the liquids may be varied within the range of 0.01—2.0 cm/s.

In said apparatus are achieved very highly pushed separations of the two phases, with the advantage of not suffering losses in polycarbonate in the separated aqueous phase, and to reduce the number of washing stages.

In general, it is possible to separate an aqueous phase in which there will not be present a polycarbonate solution and an organic phase whose content in water will be less than 0.40% by weight.

The solutions having concentrations of 12—17% in polycarbonate, subjected to the purification process according to this invention, show a tinting, expressed in APHA (Kirk-Othmer, Encyclopedia of Chemical Technology, Second Edition, Vol. 5, p. 801) degrees, of at most 5 and have a residual content in catalyst that is very low, in the case of triethylamine of less than 5 ppm.

Said polycarbonate solutions thus purified, are freed of the solvent, for instance according to the process described in European publication No. 0 003 996 A1 (application No. 79100514.3) thereby obtaining polycarbonate powders which, subjected to granulation in a single-screw extruder, at temperature between 260° and 280°C, show the following characteristics:—

| | |
|---|---|
| maximum content in ashes | 15 ppm |
| maximum content in metals (Fe, Cr, Ni) | 0.5 ppm |

Optical properties:—

| | |
|---|---|
| total transmittance, ASTM D 1003-61 minim. | 89.5% |
| Haze ASTM D 1003-61 ASTM D 1003-61 maxim. | 1.2% |
| Yellow index, ASTM D 1925 maxim. | 2% |
| Intrinsic stability greater than | 0.90 |

Said intrinsic stability, which is connected also with the level of residual impurities, represents the relationship between the viscosities at the molten state measured on a rheometer and determined on a polymer sample respectively at 60 minutes and at zero time.

In the case of polycarbonate prepared from bisphenol-A, the residual content in bisphenol-A in the purified polymer turned out to be less than 5 ppm.

By this process it is possible to purify not only the aromatic polycarbonates but also the aliphatic or aromatic-aliphatic polycarbonates prepared with the technique of interfacial polycondensation, though also other techniques such as for instance the polymerization in solution may be used.

Moreover, it is also possible to use various types of solvents of polycarbonate, provided they be immiscible with water.

In the following will now be given a few illustrative examples.

Introductory Examples 1—7:

There were carried out tests of separation of polycarbonate solutions in methylene chloride, from its emulsions in demineralized water, using 7 different types of fibres as coalescence bed. The apparatus used for the purpose was of the type schematically represented in Figure 1, and which had an inside diameter of 200 mm, filled up to a height of 120 mm with a layer of fibres of the type and characteristics specified for each test on Table 1.

Into this apparatus was fed, at 25°C and at the spacial velocities specified on Table 1, an aqueous emulsion consisting of 1 part by weight of demineralized water and 5 parts by weight of a solution in

4

methylene chloride containing 15% by weight of polycarbonate, obtained by interfacial polycondensation from bisphenol-A, and having an intrinsic viscosity of 0.52 dl/g, measured in p-dioxane at 30°C.

In the upper zone of the reaction vessel there formed two layers of liquid, one above the other and perfectly limpid. The upper layer consisted of methylene chloride saturated water.

The lower layer consisted of the polycarbonate solution in which were present small quantities of water as reported in Table 1.

Introductory Examples 8—13:

Using glass fibres as a coalescence bed, there were carried out 6 separation tests in which there were varied the spacial velocities of the feeding of the aqueous dispersions and the concentrations of polycarbonate in the solution of methylene chloride dispersed in the aqueous phase.

In the apparatus represented in Figure 1, having an inner diameter of 200 mm, filled for a height of 120 mm with a layer of glass fibres with diameter 25 µm, and in which the apparent density of the layer was 0.39 g/cm$^3$ were fed in at 25°C and at the spacial velocities reported on Table 2, various aqueous emulsions prepared from solutions of polycarbonate in methylene chloride having an intrinsic viscosity of 0.52 dl/g, and prepared by interfacial polycondensation from bisphenol-A.

The characteristics of the emulsions fed in as well as the characteristics of the separate phases have been reported on Table 2.

TABLE 1

| Example | 1 | 2 | 3 | 4 | 5 | 6 | 7 |
|---|---|---|---|---|---|---|---|
| Type of fibre | glass | stain-less steel | cotton | PTFE | rayon | nylon | poly-propylene |
| Diameter of fibre µm | 25 | 50 | 30 | 110 | 25 | 20 | 10 |
| Thickness of fibre layer mm | 120 | 120 | 120 | 120 | 120 | 120 | 120 |
| Apparent density of layer of fibres g/cm$^3$ | 0.40 | 0.50 | 0.20 | 0.65 | 0.43 | 0.22 | 0.20 |
| Weight ratio organic phase/ aqueous phase of the emulsion | 5 | 5 | 5 | 5 | 5 | 5 | 5 |
| Content in polycarbonate in the organic phase % b.w. | 15 | 15 | 15 | 15 | 15 | 15 | 15 |
| Spacial feeding velocity cm/s | 0.3 | 0.3 | 0.1 | 0.1 | 0.1 | 0.1 | 0.1 |
| Content of water in the separated organic phase % b.w. | 0.16 | 0.17 | 0.16 | 0.50 | 0.60 | 0.55 | 0.40 |
| Content of polycarbonate solution in the separated aqueous phase % b.w. | 0 | 0 | 0 | 0 | 0 | 0 | 0 |

## 0 014 462

TABLE 2

| Example | 8 | 9 | 10 | 11 | 12 | 13 |
|---|---|---|---|---|---|---|
| Type of fibre | glass | glass | glass | glass | glass | glass |
| Diameter of fibre μm | 25 | 25 | 25 | 25 | 25 | 25 |
| Thickness of layer of fibres mm | 120 | 120 | 120 | 120 | 120 | 120 |
| Apparent density of fibre layer g/cm$^3$ | 0.39 | 0.39 | 0.39 | 0.39 | 0.39 | 0.39 |
| Weight ratio organic phase/ aqueous phase of emulsion | 5 | 5 | 5 | 2 | 5 | 5 |
| Content of polycarbonate in the organic phase % b.w. | 15 | 10 | 18 | 15 | 15 | 18 |
| Spacial feeding velocity cm/s | 0.3 | 0.3 | 0.3 | 0.3 | 0.1 | 0.6 |
| Content of water in the separated organic phase % b.w. | 0.16 | 0.16 | 0.20 | 0.21 | 0.23 | 0.24 |
| Content of polycarbonate solution in the separated aqueous phase % b.w. | 0 | 0 | 0 | 0 | 0 | 0 |

Example 14

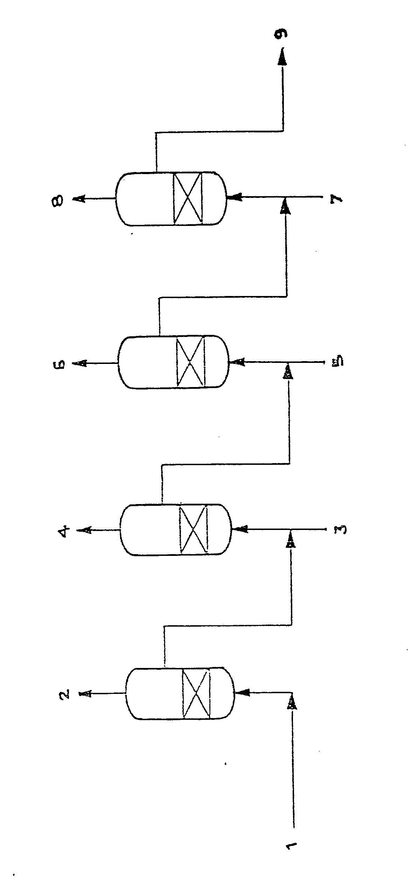

There was carried out a washing test and the separation in several stages, in a continuous way, of a polycarbonate solution coming from a process of interfacial polycondensation, according to the operational scheme shown in Figure 4, by using four separators (A, B, C and D) of the type illustrated in Figure 1, in which the coalescence bed, 120 mm high and having a density of 0.50 g/cm$^3$ consisted of inox steel fibres having a diameter of 50 μm.

The polycarbonate obtained from bisphenol-A showed an intrinsic viscosity of 0.52 dl/g.

The feeding rate of the liquids in the various stages was maintained at 0.3 cm/s.

With reference to Figure 4, (1) is indicates the feeding of the emulsion formed by the polycarbonate emulsion and by the aqueous solution coming from synthesis, and whose composition was the following:

organic phase:
polycarbonate      12% by weight

$CH_2Cl_2$      88% by weight

triethylamine      240 ppm

aqueous phase:
$H_2O$      89.04% by weight

NaCl —      9.50% by weight

NaOH      0.25% by weight

$Na_2CO_3$      1.20% by weight

ferric acid salts      0.01% by weight

wherein in the ratio organic phase/aqueous phase equals 1.

(3), (5) and (7) indicate the feedings of the washing solutions whose compositions are respectively the following:

3) aqueous solution of NaOH at 1% b.w. concentration
5) aqueous solution of $H_3PO_4$ at 1.5% b.w. concentration
7) water which were emulsified with the organic phase coming from the preceding separation stage, so as to have a weight ratio organic phase/washing solution of 5.

(2), (4), (6) and (8) indicate the discharges of the aqueous solutions after separation.

(9) indicates the final discharge of the purified polycarbonate solution, whose composition was as follows:

| polycarbonate | 12.1% by weight |
| --- | --- |
| methylene chloride | 87.73% by weight |
| water | 0.17% by weight |
| Impurities: triethylamine | <1 ppm |
| $\left.\begin{array}{l} Na^+ \\ Cl^- \\ phenols \end{array}\right\}$ | <1 ppm |

From the solution coming from discharge 9), after separation of the solvent according to the method described in the European publication No. 0 003 996 A1, and after a successive granulation, there was obtained a polycarbonate of the following characteristics:

| ashes (residue of combustion at 800°C) | <10 ppm |
| --- | --- |
| heavy metals | <1 ppm |
| phenols | <1 ppm |

The optical properties, determined on standard test specimen, were the following:

| HAZE ASTM D 1003-61 | 1.2% |
| --- | --- |
| Transmittance ASTM D 1003-61 | 91% |

**Claims**

1. A continuous process of separating an emulsion by coalescence comprising at least one disperse phase emulsified in at least one continuous phase, wherein the emulsion is passed at a spacial velocity of 0.01 to 2 cm/s through a layer of fibres 10 to 500 mm thick, the fibres having a diameter comprised between 5 and 200 μm, and the phases subsequently separated in the form of two layers are continuously removed beyond the layer of fibres, characterized in that the layer of fibres has an apparent density of 0.2 to 0.7 g/cm³ and the emulsion is an aqueous washing emulsion obtained by a series of aqueous washing stages, where in each stage the washing was accomplished by emulsifying an organic solution of the reaction product of a polycarbonate with an aqueous phase having a pH comprised between 2 and 14, the emulsion consisting of an aqueous phase containing the process impurities and an organic phase consisting of 10 to 20% by weight of polycarbonate in an organic solvent, wherein the weight ratio between the organic phase and the aqueous phase is comprised between 0.2 and 50.

2. Process according to Claim 1, characterized in that the fibres used are chosen from amongst glass wool, glass fibres, metal fibres, e.g., corrosion resisting steel fibres, cotton fibres, polyvinyl alcohol based fibres, polyolefine fibres e.g., polypropylene fibres, polyamide fibres, polytetrafluoroethylene fibres and carbon.

**Patentansprüche**

1. Kontinuierliches Verfahren zur Trennung einer Emulsion durch Koaleszenz, die zumindest eine disperse Phase, die in zumindest einer kontinuierlichen Phase emulgiert ist, enthält, bei dem man die Emulsion mit einer Raumgeschwindigkeit von 0,01 bis 2 cm/s durch eine 10 bis 500 mm dicke Faserschicht passieren läßt, wobei die Fasern einen Durchmesser zwischen 5 und 200 μm besitzen und die anschließend getrennten Phasen in Form von zwei Schichten kontinuierlich jenseits der Faserschicht entfernt werden, dadurch gekennzeichnet, daß die Faserschicht eine scheinbare Dichte von 0,2 bis 0,7 g/cm³ besitzt und die Emulsion eine wäßrige Waschemulsion ist, die durch eine Reihe wäßriger Waschstufen erhalten wird, bei der in jeder Stufe das Waschen durch Emulgieren einer organischen Lösung des Reaktionsproduktes eines Polycarbonats mit einer wäßrigen Phase mit einem pH zwischen 2 und 14 bewirkt wird, wobei die Emulsion aus einer wäßrigen Phase die Verfahrensverunreinigungen enthält und einer organischen Phase, die aus 10

8

**0 014 462**

bis 20 Gew.-% Polycarbonat in einem organischen Lösungsmittel besteht, besteht, wobei das Gewichtsverhältnis zwischen organischer Phase und wäßriger Phase zwischen 0,2 und 50 liegt.

2. Verfahren gemäß Anspruch 1, dadurch gekennzeichnet, daß die verwendeten Fasern unter Glaswolle, Glasfasern, Metallfasern, z.B. korrosionsbeständigen Stahlfasern, Baumwollfasern, Fasern auf Polyvinylalkohol-Basis, Polyolefinfasern, z.B. Polypropylenfasern, Polyamidfasern, Polytetrafluoräthylenfasern und Kohlenstoff ausgewählt werden.

**Revendications**

1. Un procédé continu de séparation d'une émulsion par coalescence comprenant au moins une phase dispersée émulsifiée dans au moins une phase continue, dans lequel l'émulsion est passée à une vitesse spatiale de 0,01 à 2 cm/sec au travers d'une couche de fibres ayant une épaisseur de 10 à 500 mm, ces fibres présentant un diamètre compris entre 5 et 200 µm et les phases étant ultérieurement séparées sous la forme de deux couches que l'on retire en continu au-delà de la couche de fibres, caractérisé en ce que la couche de fibres présente une densité apparente de 0,2 à 0,7 g/cm$^3$ et en ce que l'émulsion est une émulsion de lavage aqueuse obtenue par une série d'étapes de lavage aqueux dans laquelle chaque étape de lavage est effectuée par émulsification d'une solution organique du produit de la réaction d'un polycarbonate, avec une phase aqueuse présentant un pH compris entre 2 et 14, l'émulsion étant formée d'une phase aqueuse contenant les impuretés du procédé et la phase organique consistant en 10 à 20% en poids de polycarbonate dans un solvant organique dans laquelle le rapport pondéral entre la phase organique et la phase aqueuse est compris entre 0,2 et 50.

2. Procédé selon la revendication 1, caractérisé en ce que les fibres utilisées sont choisies parmi laine de verre, fibres de verre, fibres de métal par exemple fibres d'acier résistant à la corrosion, fibres de coton, fibres à base d'alcool polyvinylique, fibres de polyoléfine par exemple fibres de polypropylène, fibres de polyamide, fibres de polytétrafluoroéthylène et carbone.

9

FIG. 1

FIG. 3

FIG. 2